# EUROPÄISCHE PATENTSCHRIFT

(11) **EP 3 473 827 B1**
(45) Veröffentlichungstag und Bekanntmachung des Hinweises auf die Patenterteilung: **04.03.2020**
(21) Anmeldenummer: 18200364.0
(22) Anmeldetag: 15.10.2018
(51) Int. Cl.: F01N 3/20, F01N 13/14

(54) **MISCHANORDNUNG**
MIXING ARRANGEMENT
DISPOSITIF DE MÉLANGE

(30) Priorität: 18.10.2017 DE 102017124276
(43) Veröffentlichungstag der Anmeldung: 24.04.2019
(73) Patentinhaber: Eberspächer Exhaust Technology GmbH & Co. KG, 66539 Neunkirchen (DE)
(72) Erfinder: Gaiser, Gerd, 72768 Reutlingen (DE)
(74) Vertreter: Ruttensperger Lachnit Trossin Gomoll

(56) Entgegenhaltungen:
- EP-A1- 1 936 137
- EP-A1- 3 141 719
- WO-A1-2005/103459
- DE-A1-102014 017 961
- DE-A1-102017 204 449

## Beschreibung

Die vorliegende Erfindung betrifft eine Mischanordnung für eine Abgasanlage einer Brennkraftmaschine, umfassend eine Mischstrecke mit einem stromabwärts bezüglich einer Reaktionsmittelabgabeanordnung zu positionierenden Mischstreckeneintrittsbereich und einem stromaufwärts bezüglich einer Katalysatoranordnung zu positionierenden Mischstreckenaustrittsbereich.

Aus der DE 102 01 044 A1 ist eine Abgasanlage für eine Brennkraftmaschine bekannt, bei welcher in einem Längenabschnitt der Abgasanlage eine rohrartige Innenwandung von einer ebenfalls rohrartigen Außenwandung umgeben ist. Die Innenwandung umgibt ein von Abgas durchströmbares Innenvolumen. Zwischen der Innenwandung und der Außenwandung ist ein ebenfalls von Abgas durchströmbares Außenvolumen gebildet. Stromaufwärts bezüglich der Innenwandung bzw. dem zwischen der Innenwandung und der Außenwandung gebildeten Außenvolumen ist ein Drallerzeuger vorgesehen. Der Drallerzeuger verleiht dem im Wesentlichen geradlinig von stromaufwärts heranströmenden Abgas eine Umfangs-Strömungsrichtungskomponente. Abhängig von der Strömungsgeschwindigkeit des auf den Drallerzeuger zu strömenden Abgases wird der Abgasstrom so geleitet, dass er bei vergleichsweise geringer Strömungsgeschwindigkeit im Wesentlichen vollständig durch das Innenvolumen strömt, bei sehr hoher Strömungsgeschwindigkeit im Wesentlichen vollständig durch das Außenvolumen strömt und in einem mittleren Strömungsbereich der Abgasstrom sich auf das Innenvolumen und das Außenvolumen verteilt. Um dies zu erreichen, weist der Drallerzeuger beispielsweise bezüglich der Strömungsrichtung des auf diesen zu strömenden Abgases angestellte und in einer kranzartigen Formation angeordnete Leitschaufeln auf.

Um den Schadstoffausstoß von Brennkraftmaschinen, insbesondere DieselBrennkraftmaschinen, zu mindern, ist es bekannt, dem Abgas ein Reaktionsmittel, beispielsweise eine Harnstoff/Wasser-Lösung, beizumischen. In einer Mischstrecke durchmischt das Reaktionsmittel sich mit dem Abgas, wobei das Reaktionsmittel verdampft bzw. thermisch zersetzt wird und im Wesentlichen Ammoniak entsteht, der in einer stromabwärts positionierten SCR-(selektive katalytische Reduktion)-Katalysatoranordnung in einer katalytischen Reaktion zur Minderung des Anteils schädlichen Stickoxids reagiert. Vor allem bei vergleichsweise niedrigen Betriebs- bzw. Umgebungstemperaturen bzw. hohen Dosierraten des Reaktionsmittels besteht die Gefahr, dass dieses nicht effizient mit dem Abgas durchmischt bzw. zersetzt wird und somit keine effiziente Bereitstellung von für die selektive katalytische Reduktion erforderlichem Ammoniak erfolgt.

Eine Mischanordnung gemäß dem Oberbegriff des Anspruchs 1 ist aus der WO 2005/103459 A1 bekannt. Weitere Mischanordnungen offenbaren die Publikationen DE 10 2017 204 449 A1, EP 3 141 719 A1, EP 1 936 137 A1 und DE 10 2014 017 961 A1.

Es ist die Aufgabe der vorliegenden Erfindung, eine Mischanordnung für eine Abgasanlage einer Brennkraftmaschine bereitzustellen, welche eine effiziente Durchmischung von Reaktionsmittel und Abgas sowie eine effiziente Zersetzung des Reaktionsmittels gewährleistet.

Erfindungsgemäß wird diese Aufgabe gelöst durch eine Mischanordnung für eine Abgasanlage einer Brennkraftmaschine gemäß Anspruch 1. Diese umfasst eine Mischstrecke mit einem stromabwärts bezüglich einer Reaktionsmitteleingabeanordnung zu positionierenden Mischstreckeneintrittsbereich und einem stromaufwärts bezüglich einer Katalysatoranordnung zu positionierenden Mischstreckenaustrittsbereich, wobei die Mischstrecke eine ein von Abgas oder/und Reaktionsmittel durchströmbares Innenvolumen umgebende Innenwandung und eine die Innenwandung umgebende Außenwandung umfasst, wobei zwischen der Innenwandung und der Außenwandung ein das Innenvolumen ringartig umgebendes Außenvolumen gebildet ist, wobei an der Innenwandung eine elektrisch erregbare Heizeinrichtung vorgesehen ist, oder/und wobei an der Innenwandung eine Wärmeübertragungsrippenformation vorgesehen ist.

Die vorliegende Erfindung stellt Maßnahmen bereit, welche dafür sorgen, dass verbesserte thermische Bedingungen für die Verdampfung bzw. Zersetzung des dem Abgas beigemischten Reaktionsmittels bereitgestellt werden können. Hierzu kann einerseits eine elektrisch erregbare Heizeinrichtung dienen, die vor allem dann betrieben wird, wenn das Abgas oder/und abgasführende Komponenten einer Abgasanlage vergleichsweise niedrige Temperaturen aufweisen, um insbesondere in einem derartigen Betriebszustand ausreichend Wärmeenergie für die Verdampfung bzw. die thermische Zersetzung des Reaktionsmittels bereitzustellen. Transportiert das Abgas ausreichend Wärme bzw. sind die abgasführenden Komponenten durch den Abgasstrom ausreichend erwärmt, kann das Bereitstellen einer Wärmeübertragungsrippenformation und die somit für die Erwärmung des Reaktionsmittels bereitgestellte vergrößerte Wechselwirkungsoberfläche ebenfalls zu einem verbesserten Wärmeeintrag in das Abgas bzw. das Reaktionsmittel beitragen.

Um in einfacher Art und Weise aktiv Wärme in die Mischanordnung eintragen zu können, umfasst die elektrisch erregbare Heizeinrichtung wenigstens ein durch elektrische Erregung erwärmbares Heizelement. Ein derartiges Heizelement kann aus Metallmaterial, Keramikmaterial oder Halbleitermaterial aufgebaut sein.

Das Vorsehen des wenigstens einen Heizelements an einer Innenseite der Innenwandung sorgt dafür, dass Wärme insbesondere dort in die Innenwandung eingetragen wird, wo eine primäre thermische Wechselwirkung mit dem Reaktionsmittel erfolgen wird. Ferner wird auf diese Art und Weise ein Wärmeverlust nach außen über die Außenwand weitestgehend vermieden.

Bei der erfindungsgemäßen, baulich einfach zu realisierenden Ausgestaltung umfasst das wenigstens eine Heizelement einen eine Längsmittenachse der Innenwandung windungsartig umgebenden Heizleiter.

Ist der Wärmebedarf über im Wesentlichen die gesamte Länge der Mischstrecke näherungsweise konstant, wird vorgeschlagen, dass eine Ganghöhe der Windungen des Heizleiters in Richtung der Längsmittenachse der Innenwandung wenigstens bereichsweise im Wesentlichen konstant ist.

Variiert der Wärmebedarf über die Länge der Mischstrecke, kann eine Ganghöhe der Windungen des Heizleiters in Richtung der Längsmittenachse variieren. Beispielsweise kann bei derartiger Ausgestaltung in wenigstens einem Längenbereich der Innenwandung die Ganghöhe der Windungen des Heizleiters in einer Hauptströmungsrichtung vorzugsweise im Wesentlichen kontinuierlich zunehmen.

Bei einer beispielhaften, nicht erfindungsgemäßen Ausgestaltungsart kann wenigstens ein Heizelement einen mäanderartig gewundenen Heizleiter umfassen.

Wenigstens ein Heizelement kann ein PTC-Heizelement sein. Dabei wird in besonders vorteilhafter Weise die Widerstandscharakteristik eines derartigen PTC-Heizelements genutzt, welche in einem Temperaturbereich einen deutlich progressiven Anstieg aufweist und somit zu einer Selbstbegrenzung des durch ein derartiges Heizelement fließenden elektrischen Stroms führt. Damit kann beispielsweise erreicht werden, dass, ohne eine Temperaturregelung durchführen zu müssen, die Temperatur der aktiv erwärmten Innenwandung sich in einem Temperaturbereich von etwa 300°C einstellt. Hierzu kann beispielsweise Bariumtitanat als Aufbaumaterial für ein derartiges PTC-Heizelement verwendet werden.

Wenn das Außenvolumen gegen Durchströmung mit Abgas oder/und Reaktionsmittel abgeschlossen ist, bildet dieses Außenvolumen im Wesentlichen einen Isolierspalt, welcher Wärmeverluste nach außen möglichst gering halten soll.

Ist das Außenvolumen von Abgas oder/und Reaktionsmittel durchströmbar, kann auch dieses Volumen zum Wärmeübertrag auf das die Innenwandung auch an ihrer Außenseite umströmende Abgas bzw. Reaktionsmittel genutzt werden.

Dabei ist es besonders vorteilhaft, wenn die Wärmeübertragungsrippenformation eine Mehrzahl von an der Außenseite des Innenrohrs in Umfangsrichtung aufeinanderfolgend angeordneten Wärmeübertragungsrippen umfasst.

Die Wärmeübertragungsrippen können beispielsweise plattenartig ausgebildet sein oder/und können bezüglich der Längsmittenachse der Innenwandung sich im Wesentlichen von der Außenseite der Innenwandung nach radial außen erstreckend angeordnet sein.

Bei einer alternativen Ausgestaltung kann eine vergleichsweise große Wärmeübertragungsoberfläche dadurch bereitgestellt werden, dass die Wärmeübertragungsrippen die Innenwandung an ihrer Außenseite wellenartig umgebend angeordnet sind.

Eine besonders effiziente thermische Wechselwirkung des Abgases bzw. des Reaktionsmittels mit der Wärmeübertragungsrippenformation kann dadurch erreicht werden, dass eine Mehrzahl von in Richtung der Längsmittenachse der Innenwandung aufeinanderfolgend angeordneten Gruppen von Wärmeübertragungsrippen vorgesehen ist, wobei die Wärmeübertragungsrippen unmittelbar aufeinanderfolgender Gruppen in Umfangsrichtung bezüglich einander versetzt sind oder/und in unmittelbar aufeinanderfolgenden Gruppen die Wärmeübertragungsrippen zueinander einen unterschiedlichen Umfangsabstand aufweisen, so dass im Übergang der in Strömungsrichtung aufeinanderfolgenden Gruppen eine ständige Erneuerung der in thermische Wechselwirkung mit der Oberfläche der Wärmeübertragungsrippen tretenden Grenzschicht erfolgt.

Um einerseits eine große Oberfläche bereitstellen zu können, andererseits den Abgasstrom in der Mischstrecke möglichst wenig zu behindern, wird vorgeschlagen, dass die Wärmeübertragungsrippen im Wesentlichen in Richtung der Längsmittenachse der Innenwandung verlaufende Wärmeübertragungsflächen aufweisen.

Die Wärmeübertragungsrippenformation kann gleichzeitig zur Halterung der Innenwandung in der Außenwandung genutzt werden, wenn die Wärmeübertragungsrippen radial außen an einer Innenseite der Außenwandung anliegen. Vorzugsweise weist dabei wenigstens ein Teil der Wärmeübertragungsrippen radial außen in Richtung der Längsmittenachse der Innenwandung axial begrenzte Abstützbereiche zur Abstützung bezüglich der Außenwandung auf, so dass ein übermäßiger Wärmeübertrag auf die Außenwandung vermieden wird.

Die Außenwandung oder/und die Innenwandung können rohrartig ausgebildet sein.

Die vorliegende Erfindung betrifft ferner eine Abgasanlage für eine Brennkraftmaschine, umfassend eine Reaktionsmittelabgabeanordnung, stromabwärts der Reaktionsmittelabgabeanordnung eine SCR-Katalysatoranordnung und zwischen der Reaktionsmittelabgabeanordnung und der SCR-Katalysatoranordnung eine erfindungsgemäß aufgebaute Mischanordnung.

Nachfolgend wird die vorliegende Erfindung mit Bezug auf die beiliegenden Figuren 3 und 8-10 detailliert beschrieben. Es zeigt:
- Fig. 1: in prinzipartiger, beispielhafter, nicht erfindungsgemäßer Darstellung einen Teil einer Abgasanlage mit einer Mischstrecke;
- Fig. 2: eine prinzipartige, beispielhafter, nicht erfindungsgemäßer Darstellung einer alternativ aufgebauten Mischstrecke;
- Fig. 3: eine Innenwandung einer erfindungsgemäß aufgebauten Mischstrecke mit einem an einer Innenseite derselben vorgesehenen Heizelement einer Heizeinrichtung;
- Fig. 4: eine beispielhafte, nicht erfindungsgemäße Innenwandung einer Mischstrecke mit einem daran vorgesehenen Heizelement einer Heizeinrichtung;
- Fig. 5: eine beispielhafte, nicht erfindungsgemäße Innenwandung einer Mischstrecke mit einem daran vorgesehenen Heizelement einer Heizeinrichtung;
- Fig. 6: eine beispielhafte, nicht erfindungsgemäße Innenwandung einer Mischstrecke mit einem daran vorgesehenen Heizelement einer Heizeinrichtung;
- Fig. 7: eine beispielhafte, nicht erfindungsgemäße Innenwandung einer Mischstrecke mit einem daran vorgesehenen Heizelement einer Heizeinrichtung;
- Fig. 8: eine Mischstrecke mit einer an einer Innenwandung vorgesehenen Wärmeübertragungsrippenformation;
- Fig. 9: zwei verschiedene Ausgestaltungsarten von an einer Innenwandung vorgesehenen Wärmeübertragungsrippenformationen;
- Fig. 10: eine perspektivische Ansicht eines Innenrohrs einer Mischstrecke mit an einer Außenseite desselben vorgesehenen Gruppen von Wärmeübertragungsrippen einer Wärmeübertragungsrippenformation.

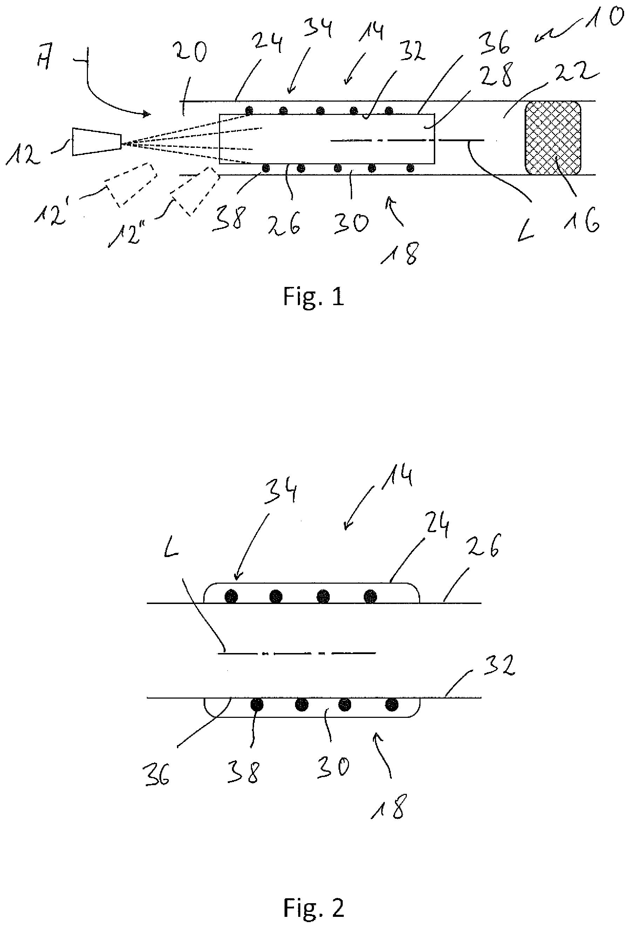

Die Fig. 1 zeigt in prinzipartiger, beispielhafter, nicht erfindungsgemäßer Darstellung einen Teil einer allgemein mit 10 bezeichneten Abgasanlage einer Brennkraftmaschine, beispielsweise in einem Fahrzeug. Die Abgasanlage 10 umfasst eine Reaktionsmittelabgabeanordnung 12, durch welche dem von weiter stromaufwärts heranströmenden Abgas A ein Reaktionsmittel, beispielsweise eine Harnstoff/Wasser-Lösung, beigemischt wird. Stromabwärts der Reaktionsmittelabgabeanordnung 12, die allgemein auch als Injektor bezeichnet wird, ist eine Mischanordnung 14 vorgesehen, in welcher das Reaktionsmittel R mit dem Abgas A gemischt wird. Dabei soll das in dem Reaktionsmittel R enthaltene Wasser verdampft werden, und der Harnstoff thermisch zersetzt werden, so dass Ammoniak und im Allgemeinen auch Isocyansäure entstehen, welche in einer Thermolysereaktion katalytisch mit dem verdampften Wasser zu weiterem Ammoniak umgesetzt werden kann. Der aus dem Reaktionsmittel generierte Ammoniak wird in einer weiter stromabwärts positionierten SCR-Katalysatoranordnung 16 katalytisch umgesetzt, um den Anteil schädlicher Stickoxide im Abgasstrom zu senken.
Die Fig. 1 veranschaulicht, dass die Reaktionsmittelabgabeanordnung 12 in verschiedener Weise positioniert werden kann. Sie kann, so wie mit durchgezogener Linie dargestellt, so angeordnet sein, dass das Reaktionsmittel R als Sprühkegel im Wesentlichen in einer Längserstreckungsrichtung der Mischanordnung 14 bzw. einer Mischstrecke 18 derselben eingespritzt wird. Alternativ kann, wie beispielsweise mit den gestrichelt eingezeichneten Anordnungen 12' und 12" veranschaulicht, eine Schrägeinspritzung erfolgen.

Die in Strömungsrichtung zwischen der Reaktionsmittelabgabeanordnung 12 und der SCR-Katalysatoranordnung 16 liegende Mischstrecke 18 weist einen auf die Reaktionsmittelabgabeanordnung 12 folgenden Mischstreckeneintrittsbereich 20 und einen im Wesentlichen der SCR-Katalysatoranordnung in Strömungsrichtung vorangehenden Mischstreckenaustrittsbereich 22 auf. Zwischen dem Mischstreckeneintrittsbereich 20 und dem Mischstreckenaustrittsbereich 22 ist die erfindungsgemäß aufgebaute Mischanordnung 14 bzw. die Mischstrecke 18 derselben doppelwandig aufgebaut. In diesem Bereich umfasst die Mischstrecke 18 eine beispielsweise als Rohr bzw. rohrartig ausgebildete Außenwandung 24 sowie eine ebenfalls als Rohr bzw. rohrartig ausgebildete Innenwandung 26. Die Außenwandung 24 und die Innenwandung 26 können beispielsweise im Wesentlichen zylindrisch ausgebildet sein und beispielsweise einen im Wesentlichen kreisrunden Querschnitt aufweisen.

Die Innenwandung 26 umgibt ein Innenvolumen 28. Zwischen der Innenwandung 26 und der Außenwandung 24 ist ein das Innenvolumen 28 ringartig umgebendes Außenvolumen 30 gebildet. Bei dem in Fig. 1 dargestellten Ausgestaltungsbeispiel ist die Mischstrecke 18 derart aufgebaut, dass sowohl das Innenvolumen 28, als auch das Außenvolumen 30 von Abgas A bzw. Reaktionsmittel R durchströmbar ist. Dabei ist vorzugsweise jedoch vorgesehen, dass die Reaktionsmittelabgabeanordnung 12 derart positioniert ist bzw. das Reaktionsmittel R derart abgibt, dass dieses im Wesentlichen eine Innenseite 32 der Innenwandung 26 benetzt, also im Wesentlichen bei Abgabe in Form eines Sprühkegels auf die Innenseite 32 der Innenwandung 26 auftrifft.

Die Mischanordnung 14 umfasst ferner eine elektrisch erregbare Heizeinrichtung 34. In dem in Fig. 1 dargestellten Ausgestaltungsbeispiel umfasst die elektrisch erregbare Heizeinrichtung 34 ein an einer Außenseite 36 der Innenwandung 26 positioniertes, die Innenwandung 26 wendelartig mit im Wesentlichen konstanter Windungsganghöhe umgebendes Heizelement 38, beispielsweise in Form eines Heizleiters. Insbesondere kann das Heizelement 38 als Mantelheizleiter ausgebildet sein, der eine beispielsweise durch Verlöten an der Innenwandung 26 anzubringenden metallischen Außenmantel und einen isoliert darin angeordneten Heizdraht aufweist. Bei elektrischer Erregung erwärmt das Heizelement 38 die Innenwandung 26, so dass das auf die Innenwandung 26 auftreffende Reaktionsmittel R Wärme aufnehmen kann. Da ein Teil des am Mischstreckeneintrittsbereich 30 in die Mischstrecke 18 eintretenden Abgases A entlang der Außenseite 36 des Innenrohrs 26, also durch das Außenvolumen 30 strömt, kann auch dieser Teil des Abgases A Wärme auf das Innenrohr 28 übertragen.

Durch die Zuordnung der Heizeinrichtung 34 zum Innenrohr 26 wird gewährleistet, dass im Wesentlichen die gesamte von der Heizeinrichtung 34 bereitgestellte Wärmeenergie in das Innenrohr 26 und über dieses in das Abgas A bzw. das Reaktionsmittel R eingetragen wird. Ein Wärmeverlust über die Außenwandung 24 kann weitestgehend vermieden werden. Ferner wird durch die beidseitige Umströmung des Innenrohrs 28 die zur Aufnahme von Wärme aus dem Abgas A zur Verfügung gestellte Oberfläche deutlich vergrößert, so dass insbesondere in einer Betriebsphase, in welcher das Abgas A bereits ausreichend Wärme transportiert und insofern eine Erregung der Heizeinrichtung 34 nicht erforderlich ist, ebenfalls eine ausreichende Übertragung von Wärmeenergie auf das das Innenrohr 36 benetzende Reaktionsmittel R gewährleistet ist. Hierzu kann beispielsweise vorgesehen sein, dass der Anteil des durch das Außenvolumen 30 strömenden Abgases A im Bereich von 20% bis 30% des Gesamtstroms liegt, so dass der überwiegende Teil des Abgases A, also etwa 70% bis 80%, durch das Innenvolumen 28 strömt. Da das Innenrohr 26 im Wesentlichen parallel zum Außenrohr 24 angeordnet ist, wird eine wesentliche Beeinträchtigung des Abgasstroms vermieden.

Im Mischstreckeneintrittsbereich 20 könnte ein vorangehend mit Bezug auf den Stand der Technik erläuterter Drallerzeuger vorgesehen sein, welcher dafür sorgt, dass abhängig von der Strömungsgeschwindigkeit und somit auch abhängig vom Lastzustand einer das Abgas A ausstoßenden Brennkraftmaschine der Anteil des durch das Außenvolumen 30 strömenden Abgases variiert, insbesondere zunimmt.

Eine alternative, beispielhafte, nicht erfindungsgemäße Ausgestaltung ist in Fig. 2 dargestellt. Auch bei dieser Ausgestaltung ist die Innenwandung 26 vom Heizelement 38 der Heizeinrichtung 34 an ihrer Außenseite 36 wendelartig umgeben. Das zwischen dem Innenrohr 26 und dem Außenrohr 24 gebildete Außenvolumen 30 ist jedoch so gestaltet, dass es von Abgas nicht durchströmbar ist. Somit bildet das Außenvolumen 30 im Wesentlichen einen Isolierspalt, welcher Wärmeverluste nach außen hin weitestgehend vermeiden soll. Auch bei dieser Ausgestaltung kann die Heizeinrichtung 34 dazu genutzt werden, insbesondere in Betriebszuständen, in welchen die abgasführenden Komponenten, wie z.B. das Innenrohr 26 bzw. das Außenrohr 24, vergleichsweise kalt sind oder mit hohen Dosierraten des Reaktionsmittels R gearbeitet wird, durch die aktive Erwärmung, also den Eintrag von Wärmeenergie über die Heizeinrichtung 34 eine ausreichende Verdampfung bzw. Zersetzung des Reaktionsmittels R zu gewährleisten.

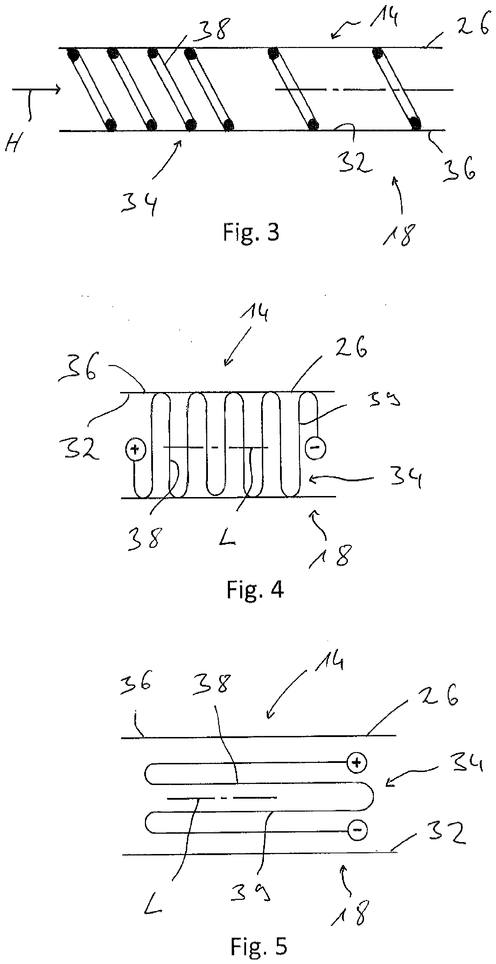

Mit Bezug auf die Fig. 3 bis 7 werden nachfolgend verschiedene Konfigurationen der Heizeinrichtung 34 beschrieben.

Die Fig. 3 zeigt eine erfindungsgemäße Ausführung einer Mischstrecke 18, bei welcher das wiederum als wendelartiger Heizleiter bereitgestellte Heizelement 38 der Heizeinrichtung 34 an der Innenseite 32 der Innenwandung 26 vorgesehen ist und daran beispielsweise materialschlüssig, wie z. B. durch Verlöten, festgelegt ist. Somit ist auch das Heizelement 38 deutlich stärker dem Strom aus Abgas A bzw. Reaktionsmittel R ausgesetzt, was zu einem erhöhten Wärmeübertrag führen kann. Das Anordnen des wendelartig gewundenen Heizelements 38 an der Innenseite 32 der Innenwandung 26 hat weiterhin den Vorteil, dass das primär auf die Innenseite 32 auftreffende Reaktionsmittel R bei seiner durch den Abgasstrom herbeigeführten Bewegung entlang der Innenseite 32 der Innenwandung 26 auf einem durch die einzelnen Windungen des Heizelements 38 vorgegebenen, entsprechend wendelartigen Weg gefördert wird, so dass die Wechselwirkungsstrecke mit der Innenseite 32 der Innenwandung 26 deutlich vergrößert wird.

Zu erkennen ist in Fig. 3 auch, dass die Ganghöhe der Windungen des Heizelements 38 variieren kann. Während im linken Teil der Innenwandung 26 die Ganghöhe über einen Längenbereich konstant ist, nimmt sie nach rechts hin zu, so dass der Abstand zwischen den einzelnen Windungen entsprechend zunimmt. Auf diese Art und Weise wird es möglich, dort, wo beispielsweise aufgrund des Auftreffens einer vergleichsweise großen Menge von Reaktionsmittel R ein stärkerer Wärmeeintrag vorteilhaft ist, dies auch durch eine größere Windungsdichte gewährleistet ist. In dem in einer Hauptströmungsrichtung H, welche im Wesentlichen einer Erstreckungsrichtung einer Längsmittenachse L der Innenwandung 26 entsprechen kann, weiter stromabwärts liegenden Teil erfolgt aufgrund der geringeren Windungsdichte bzw. der größeren Ganghöhe entsprechend auch nur ein verminderter Eintrag von Wärme in die Innenwandung 26. Auf diese Art und Weise wird es möglich, den Wärmeeintrag derart anzupassen, dass in denjenigen Bereichen, in welchen ein größerer Wärmeeintrag vorteilhaft ist, durch entsprechend kleinere Ganghöhe und somit höhere Windungsdichte ein größerer Wärmeeintrag tatsächlich erfolgt.

Es ist darauf hinzuweisen, dass dies beispielhaft und nicht erfindungsgemäß realisiert sein kann, wenn das Heizelement 38, so wie in den Fig. 1 und 2 dargestellt, an der Außenseite 36 der Innenwandung 26 angeordnet ist, und zwar unabhängig davon, ob das Außenvolumen 30 von Abgas bzw. Reaktionsmittel durchströmbar ist, oder nicht.

Eine alternative, beispielhafte, nicht erfindungsgemäße Ausgestaltung ist in Fig. 4 dargestellt. Diese zeigt ein beispielsweise wieder als Mantelheizelement ausgebildetes Heizelement 38, das an der Innenwandung 26 mit im Wesentlichen in einer Umfangsrichtung hin und her verlaufender, mäanderartiger Struktur ausgebildet ist. Das Heizelement 38 kann bei dieser Ausgestaltung an der Innenseite 32, vorzugsweise jedoch der Außenseite 36 der Innenwandung angeordnet sein.

Eine entsprechende beispielhafte, nicht erfindungsgemäße Konfiguration ist in Fig. 5 dargestellt. Hier ist das mit mäanderartiger Struktur angeordnete Heizelement 38 so positioniert, dass es im Wesentlichen in der Richtung der Längsmittenachse L der Innenwandung 26 mäanderartig hin und her verlaufend ausgebildet ist.

Auch bei den in den Fig. 4 und 5 dargestellten beispielhaften, nicht erfindungsgemäßen Anordnungen ist es in einfacher Art und Weise möglich, durch den gegenseitigen Abstand der Mäanderabschnitte 39 des jeweiligen Heizelements 38 bzw. einen variierenden Abstand den Eintrag von Wärmeenergie in die Innenwandung 26 entsprechend zu variieren, also in Bereichen, wo ein großer Wärmeeintrag vorteilhaft ist, eine größere Dichte von Mäanderabschnitten 39 vorzusehen, als in anderen Bereichen.

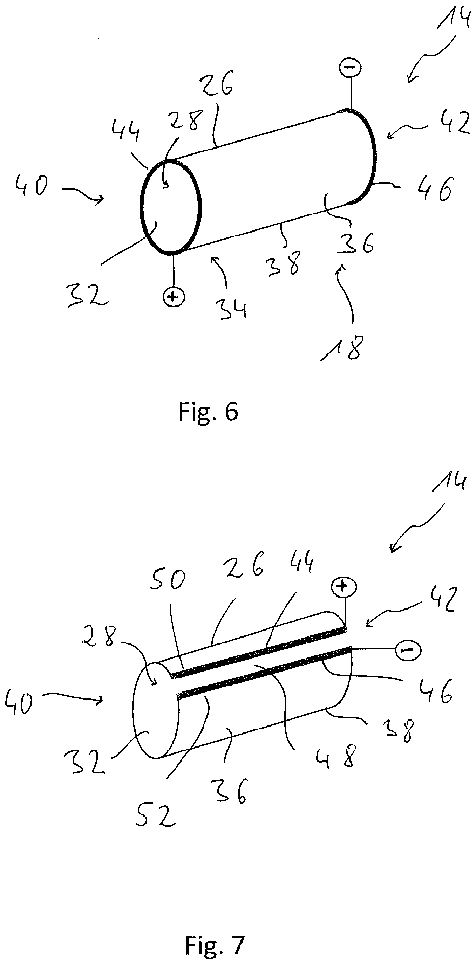

Eine weitere alternative beispielhafte, nicht erfindungsgemäße Ausgestaltung einer Heizeinrichtung 34 ist in Fig. 6 dargestellt. Bei dieser Ausgestaltungsart der Heizeinrichtung 34 bildet die Innenwandung 26 selbst ein Heizelement 38 der Heizeinrichtung 34. Die Innenwandung 26 ist im Allgemeinen aus elektrisch leitendem Material, also beispielsweise Blechmaterial, aufgebaut. An den beiden Längsendbereichen 40, 42 der Innenwandung 26 sind Kontaktierbereiche 44, 46 gebildet, in welchen die Innenwandung 26 elektrisch kontaktiert wird. Um eine über den Umfang der Innenwandung 26 gleichmäßige Stromführung bzw. Erwärmung zu gewährleisten, können die Kontaktierbereiche 44, 46 beispielsweise durch Materialaufdickungen bereitgestellt sein, so dass eine bevorzugte Stromführung in diesen Kontaktierbereichen 44, 46 in Umfangsrichtung und dann zwischen den Kontaktierbereichen 44, 46 erfolgt. Die Aufdickung kann beispielsweise durch Aufbringen von zusätzlichem Material in den Kontaktierbereichen 44, 46 bereitgestellt werden.

Bei der in Fig. 7 dargestellten, beispielhaften, nicht erfindungsgemäßen Ausgestaltungart ist die im Wesentlichen rohrartige Innenwandung 26 in einem Umfangsbereich 48 unterbrochen und weist in diesem Bereich einander gegenüberliegende Längsrandbereiche 50, 52 auf. An diesen Längsrandbereichen 50, 52, die sich beispielsweise im Wesentlichen in Richtung der Längsmittenachse L der Innenwandung 26 erstrecken, sind die Kontaktierbereiche 44, 46, beispielsweise durch eine Materialaufdickung bereitgestellt, so dass eine über die gesamte Länge der Innenwandung 26 im Wesentlichen gleichmäßige Stromführung und somit eine entsprechend im Wesentlichen gleichmäßige Erwärmung gewährleistet werden kann. Die in Fig. 7 dargestellte Ausgestaltungsform der ein Heizelement 38 bereitstellenden Innenwandung 26 kann in besonders vorteilhafter Weise verwendet werden in Verbindung mit der in Fig. 1 mit dem Bezugszeichen 12" bezeichneten Anordnung der Reaktionsmittelabgabeanordnung. Dabei können die Reaktionsmittelabgabeanordnung 12" und die Innenwandung 26 derart bezüglich einander positioniert werden, dass das Reaktionsmittel R von der Reaktionsmittelabgabeanordnung 12" im Umfangsbereich 48 durch den dort gebildeten Spalt hindurch in das Innenvolumen 28 eingespritzt werden kann.

Die Ausgestaltung der Heizeinrichtung 40 mit einem im Wesentlichen flächigen Heizelement, dieses beispielsweise bereitgestellt durch die Innenwandung 26, ist daher besonders vorteilhaft, da in denjenigen Oberflächenbereichen, in welchen durch eine verstärkte Wechselwirkung mit darauf auftreffendem Reaktionsmittel R eine stärkere Abkühlung erfolgt, auch der elektrische Widerstand entsprechend abnehmen wird und somit eine bevorzugte Stromführung in diesen Bereichen erfolgen wird, mit der Folge, dass eine entsprechend stärkere Erwärmung in diesen thermisch stärker belasteten Bereichen entstehen wird. Ein entsprechender Effekt kann beispielsweise auch dadurch bereitgestellt werden, dass ein flächig ausgebildetes Heizelement auf die Oberfläche der selbst grundsätzlich nicht als Heizelement wirksamen Innenwandung 26, vorzugsweise unter Zwischenlagerung einer elektrisch isolierenden Schicht, aufgebracht wird. Eine derartige Oberflächenbeschichtung mit elektrisch leitendem und somit ein Heizelement bereitstellendem Material, beispielsweise PTC-Material, kann beispielsweise wenigstens 50%, vorzugsweise wenigstens 80% der Oberfläche der Innenwandung 26 an der Innenseite derselben oder/und auch an der Außenseite derselben überdecken.

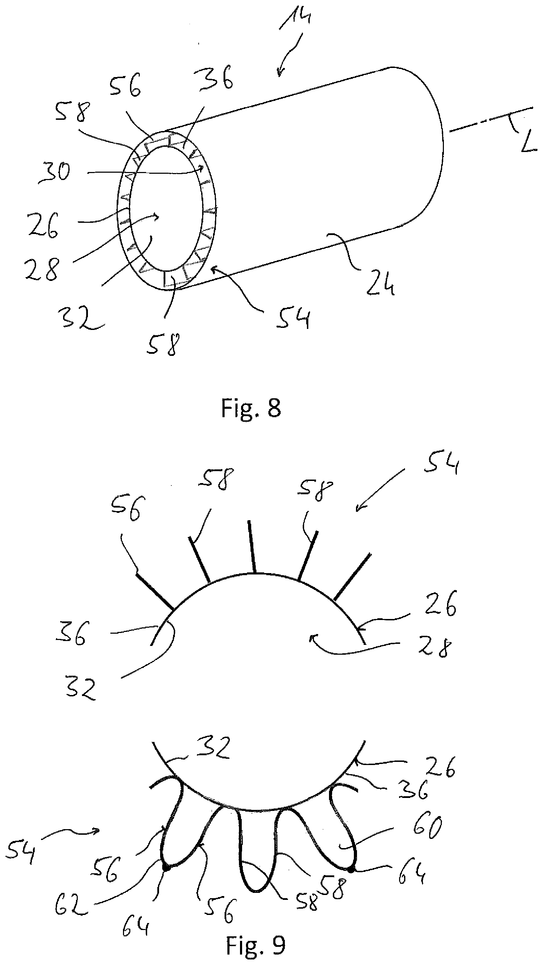

Mit Bezug auf die Fig. 8 bis 10 werden nachfolgend Konfigurationen der Mischanordnung 14 erläutert, bei welchen ein verstärkter Wärmeübertrag auf die Innenwandung 26 bzw. eine verstärkte thermische Wechselwirkung der Innenwandung 26 mit dem Reaktionsmittel R durch eine Vergrößerung der Oberfläche der Innenwandung 26 erfolgt. Es ist darauf hinzuweisen, dass die nachfolgend erläuterten Aspekte eigenständig technisch realisiert sein können, selbstverständlich aber auch in Kombination mit den vorangehend beschriebenen und auf die Bereitstellung einer elektrisch erregbaren Heizeinrichtung Bezug nehmenden Aspekten komprimiert werden können.

Die in Fig. 8 dargestellte Mischanordnung 14 ist mit der Innenwandung 26 und der diese umgebenden Außenwandung 24 aufgebaut. An der Außenseite 36 der Innenwandung 28 ist eine Wärmeübertragungsrippenformation 54 mit einer Mehrzahl von an der Außenseite 36 von der Innenwandung 26 im Wesentlichen nach radial außen abstehenden und in Richtung der Längsmittenachse L der Innenwandung 26 verlaufenden Wärmeübertragungsrippen 56 vorgesehen. Die Wärmeübertragungsrippen 56 erstrecken sich somit im Wesentlichen in dem von Abgas durchströmbaren Außenvolumen 30. Dabei überträgt das im Außenvolumen 30 strömende Abgas A Wärme auf die von diesem umströmten Wärmeübertragungsrippen 56. Somit kann auch die in dem im Außenvolumen 30 strömenden Abgas A transportierte Wärme genutzt werden, um eine verbesserte Abdampfung bzw. thermische Zersetzung des im Wesentlichen auf die Innenseite 32 des Innenrohrs 26 auftreffenden Reaktionsmittels R zu unterstützen. Da die Wärmeübertragungsrippen 56 mit den an beiden Seiten davon gebildeten Wärmeübertragungsflächen 58 sich im Wesentlichen in Richtung der Längsmittenachse L des Innenrohrs 26 erstrecken, beeinträchtigen sie die Abgasströmung im Wesentlichen nicht.

Die Fig. 9 veranschaulicht in ihrem oberen und ihrem unteren Teil zwei verschiedene Konfigurationen der Wärmeübertragungsrippenformation 54. Im oberen Teil der Fig. 9 sind die auch in Fig. 8 erkennbaren Wärmeübertragungsrippen 56 mit den beidseits daran gebildeten Wärmeübertragungsflächen 58 zu erkennen. Diese erstrecken sich, ausgehend von der Außenseite 36 der Innenwandung 26 im Wesentlichen radial nach außen und können beispielsweise so dimensioniert sein, dass sie die Außenwandung 24 im Wesentlichen nicht berühren, um einen Wärmeübertrag auf die Außenwandung 24 weitestgehend zu vermeiden.

In der in Fig. 9 unten dargestellten Konfiguration ist die Wärmeübertragungsrippenformation 54 derart ausgebildet, dass sie mit ihren Wärmeübertragungsrippen 58 die Innenwandung 26 im Wesentlichen wellenartig umgibt. Beispielsweise kann die Wärmeübertragungsrippenformation 54 durch ein eine derartige Wellenstruktur bzw. Mäanderstruktur gebogenes Wärmeübertragungsblech bereitgestellt sein, das an der Außenseite 36 der Innenwandung 26 beispielsweise durch Verlötung festgelegt wird. Es entstehen somit in der wellenartigen Struktur Kanäle 60, welche gleichermaßen von Abgas A durchströmbar sind, so dass die mit wellenartiger Struktur bereitgestellte Wärmeübertragungsrippenformation 54 sowohl an ihrer Innenseite, als auch an ihrer Außenseite jeweilige Wärmeübertragungsflächen 58 bereitstellt.

Man erkennt in dem unteren Teil der Fig. 9 ferner, dass an den bzw. zumindest einigen der mit wellenartiger Struktur bereitgestellten Wärmeübertragungsrippen 56 in jeweiligen Scheitelbereichen 62, in welchen benachbarte Wärmeübertragungsrippen 56 ineinander übergehen, beispielsweise durch noppenartige Ausformungen gebildete Abstützbereiche 64 vorgesehen sind, mit welchen die Wärmeübertragungsrippenformation 54 und über diese die Innenwandung 26 an der Außenwandung 24 abgestützt werden kann. Beispielsweise kann in diesen Bereichen eine materialschlüssige Verbindung, beispielsweise durch Verlöten, erfolgen. Die Abstützbereiche 64 sind nicht nur in Umfangsrichtung, sondern auch in axialer Richtung begrenzt, also deutlich kürzer als die Wärmeübertragungsrippen 54, so dass ein Wärmeübertragungskontakt zwischen der Wärmeübertragungsrippenformation 54 und der Außenwandung 24 minimiert ist.

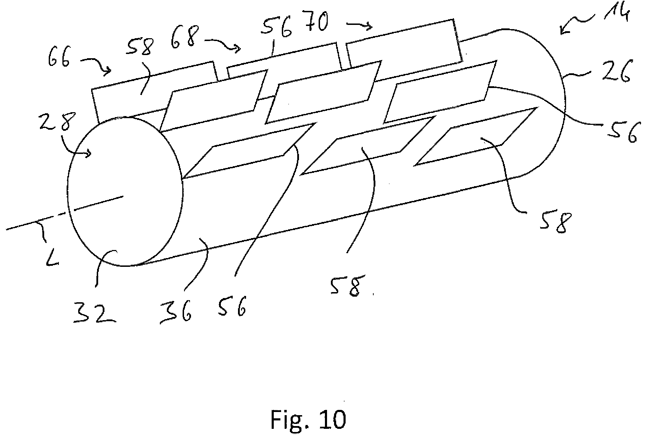

Die Fig. 10 zeigt eine Ausgestaltung, bei welcher in Richtung der Längsmittenachse L der Innenwandung 26 aufeinander folgend mehrere Gruppen 66, 68, 70 von in Umfangsrichtung aufeinanderfolgenden Wärmeübertragungsrippen 56 vorgesehen sind. In den einzelnen Gruppen 66, 68, 70 weisen die darin jeweils vorgesehenen Wärmeübertragungsrippen 56 vorzugsweise einen gleichmäßigen Umfangsabstand zu jeweils unmittelbar benachbarten Wärmeübertragungsrippen 56 auf, wobei, anders als in Fig. 10 dargestellt, selbstverständlich bei jeder Gruppe 66, 68, 70 die Wärmeübertragungsrippen 56 über den gesamten Umfang verteilt vorgesehen sind. Die Wärmeübertragungsrippen 56 unmittelbar benachbarter Gruppen 66, 68, 70 sind in Umfangsrichtung zueinander versetzt. Auch können die Wärmeübertragungsrippen 56 unmittelbar benachbarter Gruppen 66, 68, 70 jeweils unterschiedliche Umfangsabstände zueinander aufweisen.

Durch das Bereitstellen derartiger Gruppen 66, 68, 70 von Wärmeübertragungsrippen 56 wird erreicht, dass im Übergangsbereich jeder Gruppe zu einer unmittelbar benachbarten Gruppe eine zuvor vorhandene Grenzflächenströmung entlang einer jeweiligen Wärmeübertragungsfläche 58 aufgelöst wird und sich bei der nächsten Gruppe eine neue Grenzflächenströmung bilden wird, so dass ein effizienterer Wärmeübertrag erreicht werden kann. Dabei können beispielsweise die in Richtung der Längsmittenachse L aufeinander folgenden Gruppen 66, 68, 70 so angeordnet sein, dass deren jeweilige Wärmeübertragungsrippen 56 sich in Richtung der Längsmittenachse L nicht überlappen, so wie in Fig. 10 dargestellt. Alternativ könnten die Gruppen 66, 68, 70 auch in Richtung der Längsmittenachse L ineinander eingreifen, also miteinander verzahnt sein, wodurch eine größere Dichte der an der Außenseite 36 der Innenwandung 26 vorgesehenen Wärmeübertragungsrippen 56 erreicht werden kann. Ferner können bei der Ausgestaltungsform gemäß Fig. 10 die Wärmeübertragungsrippen 56 die dargestellte, plattenartige Konfiguration aufweisen oder können eine wellenartige Struktur aufweisen, wie sie beispielsweise im unteren Teil der Fig. 9 gezeigt ist.

## Patentansprüche

1. Mischanordnung für eine Abgasanlage einer Brennkraftmaschine, umfassend eine Mischstrecke (18) mit einem stromabwärts bezüglich einer Reaktionsmitteleingabeanordnung (20) zu positionierenden Mischstreckeneintrittsbereich (12) und einem stromaufwärts bezüglich einer Katalysatoranordnung (16) zu positionierenden Mischstreckenaustrittsbereich (22), wobei die Mischstrecke (14) eine ein von Abgas (A) oder/und Reaktionsmittel (R) durchströmbares Innenvolumen (28) umgebende Innenwandung (26) und eine die Innenwandung (26) umgebende Außenwandung (24) umfasst, wobei zwischen der Innenwandung (26) und der Außenwandung (24) ein das Innenvolumen (28) ringartig umgebendes Außenvolumen (30) gebildet ist, wobei an der Innenwandung (26) eine elektrisch erregbare Heizeinrichtung (34) vorgesehen ist, wobei die elektrisch erregbare Heizeinrichtung (34) wenigstens ein durch elektrische Erregung erwärmbares Heizelement (38) umfasst, wobei das wenigstens eine Heizelement (38) einen eine Längsmittenachse (L) der Innenwandung (26) windungsartig umgebenden Heizleiter umfasst,
**dadurch gekennzeichnet, dass** das wenigstens eine Heizelement (38) an einer Innenseite (32) der Innenwandung (26) vorgesehen ist.

2. Mischanordnung nach Anspruch 1, **dadurch gekennzeichnet, dass** an der Innenwandung (26) eine Wärmeübertragungsrippenformation (54) vorgesehen ist.

3. Mischanordnung nach Anspruch 1 oder 2, **dadurch gekennzeichnet,**
**dass** eine Ganghöhe der Windungen des Heizleiters in Richtung der Längsmittenachse (L) der Innenwandung (26) wenigstens bereichsweise im Wesentlichen konstant ist.

4. Mischanordnung nach Anspruch 1, 2 oder 3, **dadurch gekennzeichnet, dass** eine Ganghöhe der Windungen des Heizleiters in Richtung der Längsmittenachse (L) variiert.

5. Mischanordnung nach Anspruch 4, **dadurch gekennzeichnet, dass** in wenigstens einem Längenbereich der Innenwandung (26) die Ganghöhe der Windungen des Heizleiters in einer Hauptströmungsrichtung (H) vorzugsweise im Wesentlichen kontinuierlich zunimmt.

6. Mischanordnung nach einem der Ansprüche 1-5, **dadurch gekennzeichnet, dass** wenigstens ein Heizelement (38) ein PTC-Heizelement ist.

7. Mischanordnung nach einem der vorangehenden Ansprüche, **dadurch gekennzeichnet, dass** das Außenvolumen (30) gegen Durchströmung mit Abgas (A) oder/und Reaktionsmittel (R) abgeschlossen ist.

8. Mischanordnung nach einem der Ansprüche 1-7, **dadurch gekennzeichnet, dass** das Außenvolumen (30) von Abgas (A) oder/und Reaktionsmittel (R) durchströmbar ist.

9. Mischanordnung nach Anspruch 2 und Anspruch 8, **dadurch gekennzeichnet, dass** die Wärmeübertragungsrippenformation (54) eine Mehrzahl von an der Außenseite (36) des Innenrohrs (26) in Umfangsrichtung aufeinanderfolgend angeordneten Wärmeübertragungsrippen (56) umfasst.

10. Mischanordnung nach Anspruch 9, **dadurch gekennzeichnet, dass** die Wärmeübertragungsrippen (56) plattenartig ausgebildet sind oder/und bezüglich der Längsmittenachse (L) der Innenwandung (26) sich im Wesentlichen von der Außenseite (36) der Innenwandung (26) nach radial außen erstreckend angeordnet sind oder die Wärmeübertragungsrippen (56) die Innenwandung (26) an ihrer Außenseite (36) wellenartig umgebend angeordnet sind.

11. Mischanordnung nach Anspruch 9 oder Anspruch 10, **dadurch gekennzeichnet, dass** eine Mehrzahl von in Richtung der Längsmittenachse (L) der Innenwandung (26) aufeinanderfolgend angeordneten Gruppen (66, 68, 70) von Wärmeübertragungsrippen (56) vorgesehen ist, wobei die Wärmeübertragungsrippen (56) unmittelbar aufeinanderfolgender Gruppen (66, 68, 70) in Umfangsrichtung bezüglich einander versetzt sind oder/und in unmittelbar aufeinanderfolgenden Gruppen (66, 68, 70) die Wärmeübertragungsrippen (56) zueinander einen unterschiedlichen Umfangsabstand aufweisen.

12. Mischanordnung nach einem der Ansprüche 9-11, **dadurch gekennzeichnet, dass** die Wärmeübertragungsrippen (56) im Wesentlichen in Richtung der Längsmittenachse (L) der Innenwandung (26) verlaufende Wärmeübertragungsflächen (58) aufweisen.

13. Mischanordnung nach einem der Ansprüche 9-12, **dadurch gekennzeichnet, dass** die Wärmeübertragungsrippen (56) radial außen an einer Innenseite der Außenwandung (24) anliegen, vorzugsweise wobei wenigstens ein Teil der Wärmeübertragungsrippen (56) radial außen in Richtung der Längsmittenachse (L) der Innenwandung axial begrenzte Abstützbereiche (64) zur Abstützung bezüglich der Außenwandung (24) aufweist.

14. Mischanordnung nach einem der vorangehenden Ansprüche, **dadurch gekennzeichnet, dass** die Außenwandung (24) oder/und die Innenwandung (26) rohrartig ausgebildet ist.

15. Abgasanlage für eine Brennkraftmaschine, umfassend eine Reaktionsmittelabgabeanordnung (12), stromabwärts der Reaktionsmittelabgabeanordnung (12) eine SCR-Katalysatoranordnung (16) und zwischen der Reaktionsmittelabgabeanordnung (12) und der SCR-Katalysatoranordnung (16) eine Mischanordnung (14) nach einem der vorangehenden Ansprüche.

## Claims

1. Mixing device for an exhaust system of an internal combustion engine, comprising a mixing section (18) with a mixing section inlet area (12) to be positioned downstream in relation to a reactant introduction device (20) and with a mixing section outlet area (22) to be positioned upstream in relation to a catalytic converter device (16), wherein the mixing section (14) comprises an inner wall (26) surrounding an inner volume (28), through which exhaust gas (A) or/and reactant (R) can flow, and an outer wall (24) surrounding the inner wall (26), wherein an outer volume (30) surrounding the inner volume (28) in a ring-like manner is provided between the inner wall (26) and the outer wall (24), wherein an electrically energizable heating device (34) is provided at the inner wall (26), wherein the electrically energizable heating device (34) comprises at least one heating element (38) heatable by electrical energization, wherein the at least one heating element (38) comprises a heating conductor surrounding a central longitudinal axis (L) of the inner wall (26) in a winding manner,
**characterized in that** the at least one heating element (38) is provided on an inner side (32) of the inner wall (26).

2. Mixing device according to claim 1, **characterized in that** a heat transfer rib formation (54) is provided at the inner wall (26).

3. Mixing device according to claim 1 or claim 2, **characterized in that** a pitch of the windings of the heating conductor is essentially constant in the direction of the central longitudinal axis (L) of the inner wall (26) in at least some areas.

4. Mixing device according to claim 1, 2 or 3, **characterized in that** a pitch of the windings of the heating conductor varies in the direction of the central longitudinal axis (L).

5. Mixing device according to claim 4, **characterized in that** in at least one longitudinal area of the inner wall (26) the pitch of the windings of the heating conductor preferably increases essentially continuously in a main flow direction (H).

6. Mixing device according to one of the claims 1-5, **characterized in that** at least one heating element (38) is a PTC heating element.

7. Mixing device according to one of the above claims, **characterized in that** the outer volume (30) is closed against the flow of exhaust gas (A) or/and reactant (R).

8. Mixing device according to one of the claims 1-7, **characterized in that** exhaust gas (A) or/and reactant (R) can flow through the outer volume (30).

9. Mixing device according to claim 2 and claim 8, **characterized in that** the heat transfer rib formation (54) comprises a plurality of heat transfer ribs (56) arranged following each other in the circumferential direction on the outer side (36) of the inner pipe (26).

10. Mixing device according to claim 9, **characterized in that** the heat transfer ribs (56) have a plate-shaped configuration or/and are arranged extending radially outwardly essentially from the outer side (36) of the inner wall (26) in relation to the central longitudinal axis (L) of the inner wall (26), or the heat transfer ribs (56) are arranged such that they surround the inner wall (26) on their outer side (36) in a wave-like manner.

11. Mixing device according to claim 9 or claim 10, **characterized in that** a plurality of groups (66, 68, 70) of heat transfer ribs (56), which follow each other in the direction of the central longitudinal axis (L) of the inner wall (26), are provided, wherein the heat transfer ribs (56) of groups (66, 68, 70) following each other directly are offset in relation to one another in the circumferential direction or/and the heat transfer ribs (56) in groups directly following each other have a different circumferential distance from one another.

12. Mixing device according to one of the claims 9-11, **characterized in that** the heat transfer ribs (56) have heat transfer surfaces (58) extending essentially in the direction of the central longitudinal axis (L) of the inner wall (26).

13. Mixing device according to one of the claims 9-12, **characterized in that** the heat transfer ribs (56) abut at an inner side of the outer wall (24) radially on the outside, preferably wherein at least one part of the heat transfer ribs (56) has support areas (64) defined axially radially on the outside in the direction of the central longitudinal axis (L) of the inner wall for support in relation to the outer wall (24).

14. Mixing device according to one of the above claims, **characterized in that** the outer wall (24) or/and the inner wall (26) has a tubular configuration.

15. Exhaust system for an internal combustion engine, comprising a reactant release device (12), an SCR catalytic converter device (16) downstream of the reactant release device (12), and a mixing device (14) according to one of the above claims between the reactant release device (12) and the SCR catalytic converter device (16).

## Revendications

1. Dispositif de mélange pour un système de gaz d'échappement d'un moteur à combustion interne, comprenant une section de mélange (18) avec une zone d'entrée de section de mélange (12) à positionner en aval par rapport à un dispositif d'introduction de réactif (20) et avec une zone de sortie de section de mélange (22) à positionner en amont par rapport à un dispositif de catalyseur (16), dans lequel la section de mélange (14) comprend une paroi intérieure (26) entourant un volume intérieur (28), à travers lequel peuvent passer les gaz d'échappement (A) et/ou le réactif (R), et une paroi extérieure (24) entourant la paroi intérieure (26), dans lequel un volume extérieur (30) entourant de manière annulaire le volume intérieur (28) est prévu entre la paroi intérieure (26) et la paroi extérieure (24), dans lequel un dispositif de chauffage (34) à excitation électrique est prévu sur la paroi intérieure (26), dans lequel le dispositif de chauffage (34) à excitation électrique comprend au moins un élément chauffant (38) pouvant être chauffé par excitation électrique, dans lequel ledit au moins un élément chauffant (38) comprend un conducteur chauffant entourant de manière enroulée un axe longitudinal central (L) de la paroi intérieure (26),
**caractérisé en ce que** ledit au moins un élément chauffant (38) est prévu sur une face intérieure (32) de la paroi intérieure (26).

2. Dispositif de mélange selon la revendication 1, **caractérisé en ce qu'**une formation de nervures de transfert de chaleur (54) est prévue sur la paroi intérieure (26).

3. Dispositif de mélange selon la revendication 1 ou la revendication 2, **caractérisé en ce que** un pas des enroulements du conducteur chauffant est essentiellement constant dans la direction de l'axe longitudinal central (L) de la paroi intérieure (26) dans au moins certaines zones.

4. Dispositif de mélange selon la revendication 1, 2 ou 3, **caractérisé en ce qu'**un pas des enroulements du conducteur chauffant varie dans la direction de l'axe longitudinal central (L).

5. Dispositif de mélange selon la revendication 4, **caractérisé en ce que**, dans au moins une zone longitudinale de la paroi intérieure (26), le pas des enroulements du conducteur chauffant augmente de préférence de manière essentiellement continue dans une direction d'écoulement principale (H).

6. Dispositif de mélange selon l'une des revendications 1 à 5, **caractérisé en ce qu'**au moins un élément chauffant (38) est un élément chauffant CTP.

7. Dispositif de mélange selon l'une des revendications ci-dessus, **caractérisé en ce que** le volume extérieur (30) est fermé à l'encontre du flux de gaz d'échappement (A) ou/et de réactif (R).

8. Dispositif de mélange selon l'une des revendications 1 à 7, **caractérisé en ce que** le volume extérieur (30) peut être traversé par les gaz d'échappement (A) et/ou le réactif (R).

9. Dispositif de mélange selon la revendication 2 et la revendication 8, **caractérisé en ce que** la formation de nervures de transfert de chaleur (54) comprend une pluralité de nervures de transfert de chaleur (56) disposées successivement dans la direction circonférentielle sur le côté extérieur (36) du tube intérieur (26).

10. Dispositif de mélange selon la revendication 9, **caractérisé en ce que** les nervures de transfert de chaleur (56) ont une configuration en forme de plaque et/ou sont disposées en s'étendant radialement vers l'extérieur essentiellement depuis le côté extérieur (36) de la paroi intérieure (26) par rapport à l'axe longitudinal central (L) de la paroi intérieure (26), ou les nervures de transfert de chaleur (56) sont disposées de telle sorte qu'elles entourent la paroi intérieure (26) sur leur côté extérieur (36) de manière ondulée.

11. Dispositif de mélange selon la revendication 9 ou la revendication 10, **caractérisé en ce qu'**il est prévu une pluralité de groupes (66, 68, 70) de nervures de transmission de chaleur (56) successifs dans la direction de l'axe longitudinal central (L) de la paroi intérieure (26), les nervures de transmission de chaleur (56) de groupes (66, 68, 70) directement successifs étant décalées les unes par rapport aux autres dans la direction circonférentielle et/ou les nervures de transmission de chaleur (56) de groupes directement successifs ayant une distance circonférentielle différente les unes des autres.

12. Dispositif de mélange selon l'une des revendications 9-11, **caractérisé en ce que** les nervures de transfert de chaleur (56) présentent des surfaces de transfert de chaleur (58) s'étendant essentiellement dans la direction de l'axe longitudinal central (L) de la paroi intérieure (26).

13. Dispositif de mélange selon l'une des revendications 9-12, **caractérisé en ce que** les nervures de transfert de chaleur (56) sont en appui contre un côté intérieur de la paroi extérieure (24) radialement à l'extérieur, de préférence dans lequel au moins une partie des nervures de transfert de chaleur (56) comprend des zones de support (64) définies axialement radialement à l'extérieur dans la direction de l'axe longitudinal central (L) de la paroi intérieure pour le support par rapport à la paroi extérieure (24).

14. Dispositif de mélange selon l'une des revendications ci-dessus, **caractérisé en ce que** la paroi extérieure (24) ou/et la paroi intérieure (26) est adaptée sous forme de tube.

15. Système d'échappement pour un moteur à combustion interne, comprenant un dispositif de libération de réactif (12), un dispositif de catalyseur SCR (16) en aval du dispositif de libération de réactif (12), et un dispositif de mélange (14) selon l'une des revendications ci-dessus entre le dispositif de libération de réactif (12) et le dispositif de catalyseur SCR (16).
